# EUROPÄISCHE PATENTSCHRIFT

(11) **EP 0 661 433 B1**
(45) Veröffentlichungstag und Bekanntmachung des Hinweises auf die Patenterteilung: **15.07.1998**
(21) Anmeldenummer: 94112870.4
(22) Anmeldetag: 18.08.1994
(51) Int. Cl.: F02D 41/40, F02M 65/00

(54) **Verfahren zur Kalibrierung einer Einrichtung zur Steuerung einer Brennkraftmaschine**
Method for calibrating a control system of an internal combustion engine
Procédé pour calibrer un système pour commander un moteur à combustion interne

(30) Priorität: 24.11.1993 DE 4339957
(43) Veröffentlichungstag der Anmeldung: 05.07.1995
(73) Patentinhaber: ROBERT BOSCH GMBH, 70442 Stuttgart (DE)
(72) Erfinder: Birk, Manfred, Dipl.-Ing., D-71739 Oberriexingen (DE); Lutz, Peter, Dipl.-Ing., D-74189 Weinsberg (DE)

(56) Entgegenhaltungen:
- EP-A- 0 235 418
- DE-A- 3 622 814
- DE-A- 4 141 714

## Beschreibung

### Stand der Technik

Die Erfindung betrifft ein Verfahren zur Kalibrierung einer Einrichtung zur Steuerung einer Brennkraftmaschine.

Ein solches Verfahren ist aus dem SAE Paper 88 04 84 bekannt. Dort wird ein Verfahren beschrieben, bei dem die Abweichung zwischen einem Referenzimpuls und dem oberen Totpunkt der Kurbelwelle ermittelt wird.

Bei Brennkraftmaschinen ist üblicherweise ein Induktivgeber vorgesehen, der die Zähne am Anlasserzahnkranz abtastet und ausgehend davon ein Drehzahlwert bestimmt. Desweiteren ist vorgesehen, daß mittels einer Markierung der obere Totpunkt wenigstens eines Zylinders gekennzeichnet wird. Hierzu ist insbesondere vorgesehen, daß ein Zahn ausgelassen bzw. ein Zahn entsprechend hervorgehoben wird. Dies kann dadurch erfolgen, daß ein Zahn von den übrigen Zähnen in einer bestimmten Weise abweicht. Beispielsweise kann vorgesehen sein, daß ein Zahn aus einem anderen Material besteht.

Eine solche Anordnung hat den Nachteil, daß beim Zusammenbau der Brennkraftmaschine, insbesondere beim Anbau des Anlasserzahnkranzes und des Induktivgebers sehr genau zu arbeiten ist. Weicht der Zeitpunkt bei dem die Markierung für den oberen Totpunkt auftritt, von dem tatsächlichen Auftreten des oberen Totpunktes ab, so führt dies zu einer ungenauen Steuerung der Brennkraftmaschine. Eine solche Abweichung kann unter anderem eine erhöhte Abgasemission zur Folge haben.

### Aufgabe der Erfindung

Der Erfindung liegt die Aufgabe zugrunde, ein Verfahren zur Kalibrierung einer Einrichtung zur Steuerung einer Brennkraftmaschine bereitzustellen, mit dem sich der Aufwand bei der mechanischen Montage der Brennkraftmaschine reduzieren läßt bzw. die Abweichung zwischen dem Auftreten der Markierung für dem oberen Totpunkt und dem Zeitpunkt des oberen Totpunktes minimiert wird.

Diese Aufgabe wird gelöst mit den Merkmalen nach Anspruch 1.

### Vorteile der Erfindung

Das erfindungsgemäße Verfahren besitzt den Vorteil, daß eine wesentlich kostengünstigere Montage der Brennkraftmaschine möglich ist, da ein genauer mechanischer Anbau durch ein Abgleichverfahren am Bandende bzw. durch einen Abgleich im Steuergerät ersetzt wird. Die erfindungsgemäße Vorgehensweise bietet den Vorteil, daß bei der Motorfertigung erhebliche Kosten eingespart werden, da die Montage mit wesentlich geringeren Toleranzen erfolgen kann.

Vorteilhafte und zweckmäßige Ausgestaltungen und Weiterbildungen der Erfindung sind in den Unteransprüchen gekennzeichnet.

### Zeichnung

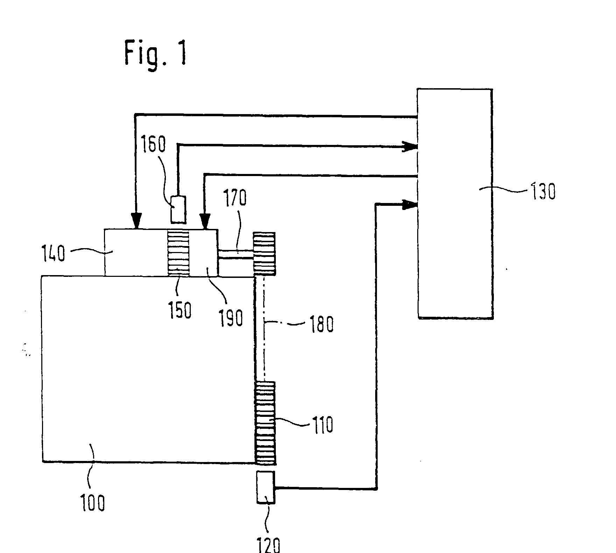

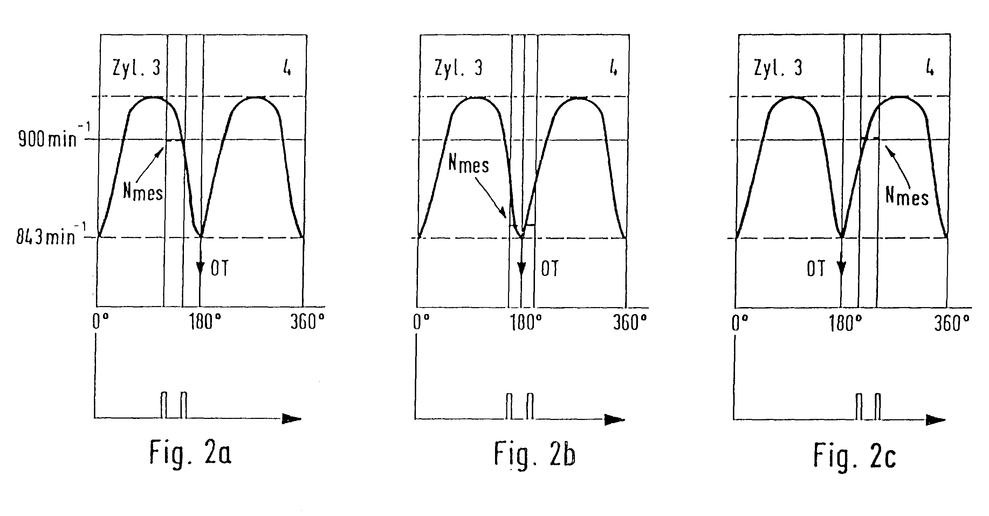

Die Erfindung wird nachstehend anhand der in der Zeichnung dargestellten Ausführungsformen erläutert. Es zeigen Figur 1 eine grob schematische Darstellung der Einrichtung zur Steuerung einer Brennkraftmaschine. Die Figuren 2 bis 3 zeigen verschiedene Zeitdiagramme zur Verdeutlichung der verschiedenen Ausführungsformen.

### Beschreibung der Ausführungsbeispiele

Im folgenden wird das erfindungsgemäße Verfahren am Beispiel einer Dieselbrennkraftmaschine beschrieben. Das beschriebene Verfahren ist aber nicht nur auf die Anwendung bei Dieselbrennkraftmaschinen beschränkt, sie kann auch auf anderer Typen von Brennkraftmaschinen übertragen werden. In diesem Fall müssen entsprechende Elemente ausgetauscht werden. So kommt beispielsweise bei fremdgezündeten Brennkraftmaschinen dem Zündzeitpunkt eine ähnliche Bedeutung zu, wie dem Einspritzbeginn bei selbstzündenden Brennkraftmaschinen.

Mit 100 ist eine Brennkraftmaschine, insbesondere eine Dieselbrennkraftmaschine bezeichnet. An der nicht dargestellten Kurbelwelle der Brennkraftmaschine ist ein Anlasserzahnkranz 110 angeordnet. Dieser wird von einem Induktivgeber 120 abgetastet. Der Induktivgeber 120 beaufschlagt ein Steuergerät, insbesondere ein EDC-Steuergerät mit Signalen.

Der Brennkraftmaschine wird über eine Kraftstoffpumpe 140 Kraftstoff zugemessen. Die Kraftstoffpumpe wird von einer Pumpenantriebswelle, auf der ein Inkrementrad 150 angeordnet ist, angetrieben. Die Inkrememente des Inkrementrades 150 werden von einem Inkrementgeber 160 abgetastet. Der Inkrementgeber 160 beaufschlagt dann das EDC-Steuergerät 130 mit einem entsprechenden Signal.

Die Pumpenantriebswelle wird von der Nockenwelle 170 der Brennkraftmaschine angetrieben, bzw. die Nockenwelle dient als Pumpenantriebswelle. Die Nockenwelle 170 und die Kurbelwelle sind über ein Antriebsmittel 180, insbesondere einen Zahnriehmen oder eine Kette, miteinander verbunden. Die Pumpenantriebswelle läßt sich mittels eines Spritzverstellers 190 gegenüber der Nockenwelle 170 verschieben.

Das EDC-Steuergerät 130 beaufschlagt abhängig von den Signalen verschiedener Sensoren, die verschiedene Betriebskenngrößen erfassen, die Kraftstoffpumpe und den Spritzversteller 190 mit Ansteuersignalen.

Diese Einrichtung arbeitet im wesentlichen wie folgt. Ausgehend von verschiedenen Sensorsignalen berechnet das EDC-Steuergerät 130 einen Wert für die eingespritzte Kraftstoffmenge und den Einspritzbeginn. Ausgehend von diesen Werten bestimmt das Steuergerät Ansteuerimpulse zur Ansteuerung des Spritzverstellers 190, der den Einspritzbeginn festlegt. Ferner gibt das Steuergerät 130 Ansteuerimpulse zur Ansteuerung eines Stellers zur Einstellung eines mengenbestimmenden Stellgliedes an die Kraftstoffpumpe 140.

Ein Induktivgeber 120 tastet die Zähne auf dem Anlasserzahnkranz 110 ab. Hieraus erkennt das Steuergerät die Stellung der Kurbelwelle. Bei dem oberen Totpunkt der Kurbelwelle handelt es sich um eine bevorzugte Stellung derselben. Um eine optimale Kraftstoffzumessung erzielen zu können, muß der Einspritzbeginn in Bezug auf den oberen Totpunkt der Kurbelwelle erfolgen. Aus diesem Grund ist am Anlasserzahnkranz eine Markierung vorgesehen, die der Induktivgeber erkennt. Der Impuls, der ausgehend von dieser Markierung erzeugt wird, wird üblicherweise als Referenzimpuls bezeichnet.

Aufgrund von Anbautoleranzen ergibt sich eine Abweichung zwischen der Lage des Referenzimpulses und dem oberen Totpunkt der Kurbelwelle.

Um eine genaue Kraftstoffzumessung erzielen zu können, ist diese Abweichung zu berücksichtigen. Es ist deshalb vorgesehen, daß Korrekturwerte ermittelt, in einem Speicher abgelegt und bei der Berechnung der Ansteuersignale berücksichtigt werden.

Diese Ermittlung der Korrekturwerte gemäß einem der im Folgenden beschriebenen Verfahren wird vorzugsweise EOL und/oder in bestimmten Abständen durchgeführt. Dies bedeutet das Verfahren wird vom Steuergerät und/oder von einer externen Einrichtung am Ende der Fertigung der Brennkraftmaschine bzw. des Fahrzeugs oder im Anschluß an eine Reparatur desselben, bei der Wartung oder in bestimmten Zeitabständen durchgeführt.

Anhand der Figur 2 soll nun ein erstes Verfahren zur Ermittlung der Abweichung zwischen der Lage des Referenzimpulses und dem oberen Totpunkt der Kurbelwelle erläutert werden. Bei dieser Ausführungsform ist vorgesehen, daß auf der Pumpenantriebswelle ein Inkrementrad angeordnet ist. Dieses Inkrementrad umfaßt eine größere Anzahl von Markierungen, die von einem Inkrementgeber erfaßt und an das Steuergerät 130 übermittelt werden.

In Figur 2 ist zum einen die momentane Drehzahl über Grad Kurbelwellenwinkel aufgetragen. Bei 0 Grad, 180 Grad und 360 Grad Kurbelwellenwinkel besitzt die Drehzahl ein Minimum. Diese Stellung der Kurbelwelle wird als oberer Totpunkt bezeichnet. So liegt bei diesem Beispiel die minimale Drehzahl bei 843 Umdrehungen pro Minute und die mittlere Drehzahl bei 900 Umdrehungen pro Minute. Desweiteren sind die Zylinder durchnumeriert und die Nummern den oberen Totpunkten zugeordnet.

In der zweiten Zeile sind die Drehzahlimpulse, die vom Inkrementrad auf der Nockenwelle bzw. der Pumpenantriebswelle erzeugt werden, aufgetragen. Hierbei sind lediglich zwei ausgewählte Impulse eingezeichnet. Die übrigen Impulse erfolgen in gleichmäßigen Winkelabständen.

In Figur 2a sind die Verhältnisse bei einem nach früh verstellten Spritzbeginn dargestellt. In Figur 2c sind die Verhältnisse bei einem nach spät verstellten Spritzbeginn aufgetragen. In Figur 2b sind die Verhältnisse aufgetragen, wenn die Impulse des Inkrementrades auf der Pumpenantriebs- bzw. Nockenwelle symmetrisch zum oberen Totpunkt auftreten. Diese Verhältnisse entsprechen einer exakt montierten Brennkraftmaschine.

Bei der Ausführungsform gemäß Figur 2 werden die Impulse eines Inkrementrades auf der Pumpenantriebswelle bzw. auf der Nockenwelle anstelle der Zähne des Anlasserzahnkranzes ausgewertet. Die beiden, dem Referenzimpuls entsprechenden, Drehzahlimpulse sind in der zweiten Zeile der Figur dargestellt.

Um die Abweichung zwischen der Lage des Referenzimpulses und der bevorzugten Stellung zu ermitteln, wird nun wie folgt vorgegangen. Die Pumpenantriebswelle wird mittels des Spritzverstellers 190 gegenüber der Kurbelwelle solange verschoben, bis die Impulse symmetrisch zum oberen Totpunkt auftreten. Dies bedeutet das die bevorzugte Stellung mittig zwischen zwei Impulsen liegt. Diese Stellung wird erkannt, wenn der zeitliche Abstand der beiden Impulse ein Maximum aufweist.

Das EDC-Steuergerät 130 bzw. ein externes Steuergerät steuert den Spritzversteller 190 derart an, daß sich der Spritzbeginn verschiebt, bis die zeitlichen Abstände zwischen den Impulsen ein Maximum annehmen. Den Betrag um den der Spritzversteller verschoben wird, entspricht dann der Abweichung zwischen der Lage des Referenzimpulses und dem oberen Totpunkt. Die so ermittelten Werte für die Abweichung der Lage des Referenzimpulses vom oberen Totpunkt wird dann als Korrekturwert abgespeichert.

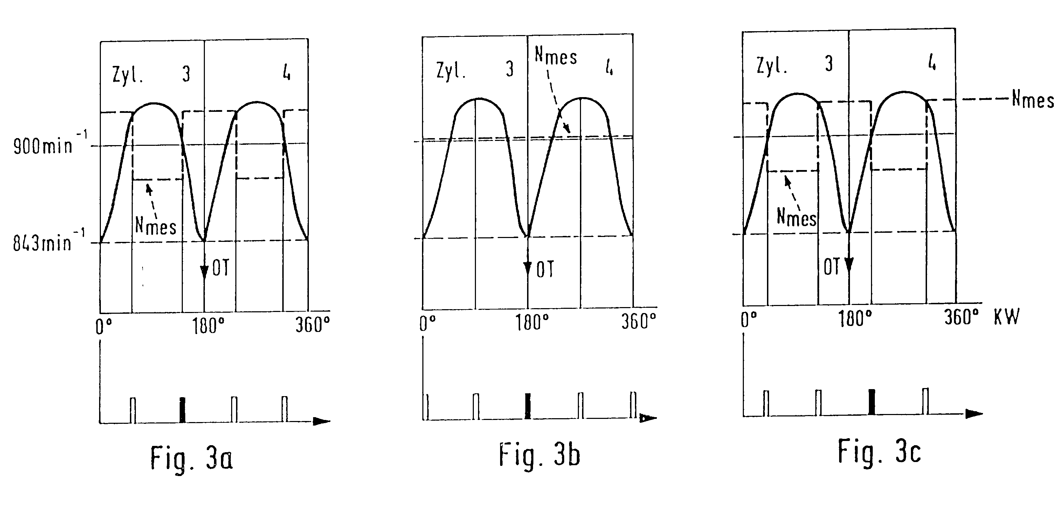

In Figur 3 ist eine weitere Ausgestaltung aufgetragen, bei der auf der Pumpenantriebswelle ein Segmentrad angeordnet ist. Ein Segementrad besitzt lediglich einige wenige Markierungen. Als Segmenträder werden beispielsweise Impulsräder bezeichnet, die pro Motorumdrehung eine der Zylinderzahl entsprechende Anzahl von Markierungen erzeugen. Ein Inkrementrad erzeugt dagegen eine Vielzahl von Impulsen, die beispielsweise im Abstand von einigen wenigen Grad Kurbelwellenwinkel auftreten.

In der zweiten Zeile der Figur 3 sind alle von diesem Segementrad erzeugten Impulse aufgetragen. Der Referenzimpuls, der den oberen Totpunkt markiert ist dabei schwarz markiert. In der ersten Zeile der Figur 3 ist wiederum entsprechend wie in Figur 2 die momentane Drehzahl über der Winkelstellung der Kurbelwelle aufgetragen. Desweiteren ist gestrichelt die mittels des Segmentrades erfaßte Drehzahl aufgetragen.

Diese Drehzahl Nₘₑₛ ergibt sich aus dem zeitlichen Abstand der Impulse des Segmentrades das auf der Pumpenantriebswelle angeordnet ist. In Figur 3b sind die Verhältnisse bei einem exakt im oberen Totpunkt justierten Segmentrad wiedergegeben. In diesem Fall tritt der Referenzimpuls genau zum oberen Totpunkt auf. Der vorhergehende und der nachfolgende Impuls liegt dann genau mittig zwischen dem oberen Totpunkt des betrachteten dritten Zylinders und dem oberen Totpunkt des vierten bzw. des ersten Zylinders. In diesem Fall sind die zeitlichen Abstände, die auch als Segementzeiten bezeichnet werden, alle gleich groß. Die gemessene Drehzahl Nₘₑₛ entspricht in diesem Fall der mittleren Drehzahl.

In Figur 3a sind die Verhältnisse aufgetragen, wenn der Referenzimpuls nach früh und in Figur 3c nach spät verschoben ist. In diesen Fällen sind die Segmentdauern unterschiedlich und es ergeben sich von Segment zu Segment unterschiedliche Drehzahlen. Zur Ermittlung der Abweichung wird nun wie folgt vorgegangen.

Die Pumpenantriebswelle wird mittels des Spritzverstellers solange verschoben, bis die Segmentimpulse symmetrisch zum oberen Totpunkt auftreten. Dies wird dadurch erkannt, daß sich die Drehzahl zwischen den einzelnen Segmenten nicht oder nur noch sehr geringfügig ändert bzw. wenn die zeitliche Änderung der Drehzahl oder der zeitlichen Abstände der Markierungen ein Minimum aufweist.

Es reicht aus, die Bestimmung des oberen Totpunktes einmalig im Anschluß an die Montage der Brennkraftmaschine und/oder nach Reperaturen durchzuführen, daher ist eine Realisierung dieser Vorgehensweise im Steuergerät nicht zwingend, sie kann auch mit externen Mitteln durchgeführt werden. Die Abgleichaufgabe besteht darin, die Lage des oberen Totpunktes bezüglich eines Referenzimpulses festzustellen. Der Korrekturwinkel, der die Abweichung zwischen dem Referenzimpuls und dem tatsächlichen oberen Totpunkt angibt, wird dann als Korrekturgröße abgespeichert. Im laufenden Betrieb werden dann die abgespeicherten Korrekturwerte bei der Berechnung der Ansteuersignale berücksichtigt.

Es ist denkbar, daß auch andere Signale anstelle des Drehzahlsignals verwendet werden. So kann z.B. das Motordrehmoment, die Ausgangssignale eines Beschleunigungsgebers am Motorblock oder ein anderes Ersatzdrehzahlsignal verwendet werden.

## Patentansprüche

1. Verfahren zur Kalibrierung einer Einrichtung zur Steuerung einer Brennkraftmaschine, mit einer ersten und zweiten Welle, bei dem die Abweichung zwischen der Lage eines Referenzimpulses der ersten Welle, und einer bevorzugten Stellung (OT) der ersten Welle ermittelt wird, wobei eine zweite Welle gegenüber der ersten Welle verschoben wird, bis die Impulse eines an der zweiten Welle angeordneten Impulsrades symmetrisch zur bevorzugten Stellung auftreten wobei der Wert, um den die zweite Welle verschoben wurde, der ursprünglichen Abweichung der Lage des Referenzimpulses von der bevorzugten Stellung entspricht und als Korrekturwert festgestellt wird.

2. Verfahren nach Anspruch 1, dadurch gekennzeichnet, daß als Impulsrad ein Inkrementrad verwendet wird, daß das Inkrementrad derart angeordnet ist, daß ohne Abweichung die bevorzugte Stellung mittig zwischen zwei Impulsen liegt.

3. Verfahren nach Anspruch 2, dadurch gekennzeichnet, daß ein symmetrisches Auftreten erkannt wird, wenn der zeitliche Abstand zweier Impulse ein Maximum aufweist.

4. Verfahren nach Anspruch 1, dadurch gekennzeichnet, daß als Impulsrad ein Segmentrad verwendet wird, daß das Segmentrad derart angeordnet ist, daß ohne Abweichung der erste Impuls bei der bevorzugten Stellung und der zweite Impuls mittig zwischen zwei bevorzugten Stellungen liegt.

5. Verfahren nach Anspruch 4, dadurch gekennzeichnet, daß ein symmetrisches Auftreten erkannt wird, wenn die zeitliche Änderung der zeitlichen Abstände der Markierungen ein Minimum aufweist.

6. Verfahren nach einem der vorherigen Ansprüche, dadurch gekennzeichnet, daß die zweite Welle mittels eines Spritzverstellers gegenüber der ersten Welle verschiebbar ist.

7. Verfahren nach einem der vorherigen Ansprüche, dadurch gekennzeichnet, daß es sich bei der bevorzugten Stellung um den oberen Totpunkt handelt.

8. Verfahren nach einem der vorherigen Ansprüche, dadurch gekennzeichnet, daß das Verfahren im Anschluß an die Montage der Brennkraftmaschine und/oder in bestimmten Abständen durchgeführt wird.

## Claims

1. Method for standardizing a device for controlling an internal combustion engine, having a first and second shaft, in which method the deviation between the position of a reference pulse of the first shaft and a preferred position (TDC) of the first shaft is determined, a second shaft being displaced with respect to the first shaft until the pulses of a pulse wheel arranged on the second shaft occur symmetrically with respect to the preferred position, the value by which the second shaft has been displaced corresponding to the original deviation of the position of the reference pulse from the preferred position and being defined as the correction value.

2. Method according to Claim 1, characterized in that an increment wheel is used as pulse wheel, in that the increment wheel is arranged in such a way that the preferred position lies centrally between two pulses without deviation.

3. Method according to Claim 2, characterized in that a symmetrical occurrence is detected if the time interval between two pulses is at a maximum.

4. Method according to Claim 1, characterized in that a segment wheel is used as pulse wheel, in that the segment wheel is arranged in such a way that the first pulse lies in the preferred position and the second pulse lies centrally between two preferred positions without deviation.

5. Method according to Claim 4, characterized in that a symmetrical occurrence is detected if the change in time of the time intervals between the marks is at a minimum.

6. Method according to one of the preceding claims, characterized in that the second shaft can be displaced with respect to the first shaft by means of an injection timing device.

7. Method according to one of the preceding claims, characterized in that the preferred position is the top dead centre.

8. Method according to one of the preceding claims, characterized in that the method is carried out after the assembly of the internal combustion engine and/or at specific intervals.

## Revendications

1. Procédé de calibrage d'une installation de commande d'un moteur à combustion interne ayant un premier et un second arbre, selon lequel
• on détermine la différence entre la position d'une impulsion de référence du premier arbre et une position préférentielle (point mort haut, OT) du premier arbre,
• on décale un second arbre par rapport au premier arbre jusqu'à ce que les impulsions d'une roue impulsionnelle portée par le second arbre se produise symétriquement par rapport à la position préférentielle, la valeur du décalage du second arbre correspondant à la déviation d'origine de la position de l'impulsion de référence par rapport à la position préférentielle et servant de valeur de correction.

2. Procédé selon la revendication 1,
caractérisé en ce que
la roue impulsionnelle est une roue à incrément, montée pour que la position préférentielle se trouve au milieu de deux impulsions sans déviation.

3. Procédé selon la revendication 2,
caractérisé en ce qu'
on considère qu'une apparition est symétrique si l'intervalle de temps de deux impulsions présente un maximum.

4. Procédé selon la revendication 1,
caractérisé en ce que
la roue impulsionnelle est une roue à segments montée de façon que sans déviation de la première impulsion pour une position préférentielle, la seconde impulsion se trouve au milieu des deux positions préférentielles.

5. Procédé selon la revendication 4,
caractérisé en ce qu'
on considère qu'il y a une apparition symétrique si la variation dans le temps des intervalles de temps des marquages présente un minimum.

6. Procédé selon l'une quelconque des revendications précédentes,
caractérisé en ce que
le second axe est déplacé par rapport au premier axe par l'organe de réglage d'injection.

7. Procédé selon l'une quelconque des revendications précédentes,
caractérisé en ce que
la position préférentielle est le point mort haut.

8. Procédé selon l'une quelconque des revendications précédentes,
caractérisé en ce que
le procédé est exécuté en liaison avec le montage du moteur à combustion interne et/ou à des intervalles donnés.
